# EUROPEAN PATENT SPECIFICATION

(11) **EP 3 216 528 B1**
(45) Date of publication and mention of the grant of the patent: **12.12.2018**
(21) Application number: 15857694.2
(22) Date of filing: 08.10.2015
(51) Int. Cl.: B05D 7/14, C09D 7/40, C09D 7/61, C09D 175/04, C09D 201/00, B05D 3/02

(54) **METHOD FOR PRODUCING COATED METAL STRIP**
VERFAHREN ZUR HERSTELLUNG EINES BESCHICHTETEN METALLSTREIFENS
PROCÉDÉ DE PRODUCTION DE BANDE MÉTALLIQUE REVÊTUE

(30) Priority: 07.11.2014 JP 2014227042
(43) Date of publication of application: 13.09.2017
(73) Proprietor: Nisshin Steel Co., Ltd., Chiyoda-ku Tokyo 100-8366 (JP)
(72) Inventor: MORIKAWA, Shigeyasu, Tokyo 100-8366 (JP); FUJII, Takahiro, Tokyo 100-8366 (JP)
(74) Representative: Epping - Hermann - Fischer
(86) International application number: PCT/JP2015/005120
(87) International publication number: WO 2016/072046

(56) References cited:
- WO-A1-2013/145712
- WO-A1-2013/145712
- JP-A- H09 299 876
- JP-A- H09 299 876
- JP-A- 2003 251 743
- JP-A- 2003 266 017
- JP-A- 2005 349 684
- JP-A- 2007 161 765
- JP-A- 2008 179 754
- JP-B1- 5 543 004

## Description

### Technical Field

The present invention relates to a method for producing a coated metal strip which has a metal strip and a coating formed on at least one surface of the metal strip, the coating being a part to be joined to a molded article of a thermoplastic resin composition.

### Background Art

Metal strips, metal sheets, press-molded articles made of a metal strip or metal sheet, or so-called "shaped metal materials," which are molded articles formed by casting, forging, cutting, powder metallurgy or the like, are essential components for producing various industrial products, such as automobiles. A composite produced by joining a molded article of a resin composition to a shaped metal material is lighter than a component made only of a metal and, on the other hand, is stronger than a component made only of a resin. Such composites are used in electronic devices, such as cellular phones and personal computers.

As described above, a composite is produced by joining a molded article of a resin composition to a shaped metal material. Therefore, high adhesion between the shaped metal material and the molded article of a resin composition, joined to each other, becomes important. In recent years, a method for producing a composite in which a shaped metal material can be joined to a molded article of a resin composition with high adhesion has been proposed (see, e.g., PTL 1).

In the method for producing a composite described in PTL 1, provided firstly is a coated shaped metal material which has a shaped metal material and a coating formed on the surface of the shaped metal material, the coating including a polyurethane resin containing a polycarbonate unit, and having a film thickness of 0.5 µm or more. Secondly, the coated shaped metal material provided is inserted into an injection molding die, and a thermoplastic resin composition is injected into the injection molding die to thereby join a molded article of the thermoplastic resin composition to the surface of the coated shaped metal material. Accordingly, the coated shaped metal material can be joined to the molded article of the thermoplastic resin composition with high adhesion in the composite described in PTL 1. The examples of PTL 1 describe a composite having a metal sheet as a shaped metal material, and show that a coated metal sheet can be joined to a molded article of a thermoplastic resin composition with high adhesion.
PTL 2 discloses a method for manufacturing an organic coating metal strip as a prior art. Furthermore PTL 2 discloses that a coated metal strip after baking is cooled to 50 ° C or lower, and the metal strip is wound up. Finally PTL 2 teaches that by cooling the metal strip to 50 °C or lower, an adhesion of the coating to a subsequent bridle roll is suppressed.
PTL 3 discloses an organic coating metal sheet comprising a metal sheet and a coating of a water-based coating material as a prior art. Furthermore PTL 3 teaches that blocking may occurs in the wound state in a general organic coating metal strip, even though the organic coating metal strip is cooled to 40°C-70 °C after baking.

### Citation List

### Patent Literature

PTL 1
   Japanese Patent Application Laid-Open No. 2013-226796
PTL 2
   JP H09 299876 A
PTL 3
   JP 2005 349684 A

### Summary of Invention

### Technical Problem

In some cases, as a base material for the coated shaped metal material as described above, a metal strip, which needs winding, is used in place of the metal sheet, which does not need winding. In such a case, when producing a coated metal strip (coated shaped metal material), it is necessary to continuously perform a pretreatment and coating formation on the surface of a metal strip unwound from a coil, and subsequently to wind the resultant coated metal strip. However, when a coated metal strip is produced in a manner as described in PTL 1, in some cases, adhesion between a metal strip and a coating becomes unsatisfactory, or a phenomenon (blocking) of joining between coated metal strips adjacent to each other occurres in a coil after the winding.

An object of the present invention is to provide a method for producing a coated metal strip which has a metal strip and a coating formed on/above at least one surface of the metal strip, the coating being a part to be joined strongly to a molded article of a thermoplastic resin composition, and in which the adhesion between the metal strip and the coating is excellent and blocking is less likely to occur.

### Solution to Problem

The present inventors have found that the above object can be achieved by adjusting the temperature of a metal strip during the application of a coating material and the temperature of a coated metal strip during the winding to fall within predetermined ranges, and conducted further studies to thereby complete the present invention.

Specifically, the present invention relates to the following method for producing a coated metal strip.
[1] A method for producing a coated metal strip which has a metal strip and a coating formed on at least one surface of the metal strip, the coating being a part to be joined to a molded article of a thermoplastic resin composition, the method including: running a metal strip; applying a coating material containing a polyurethane resin and 5 mass% or more of a nonvolatile component on the running metal strip in a state where a surface temperature of the running metal strip is 60°C or lower, the polyurethane resin containing a polycarbonate unit; baking the coating material applied on the running metal strip at a temperature in a range of 80 to 250°C to form a coating having a film thickness of 0.3 µm or more on the running metal strip; cooling the running metal strip having the coating formed thereon until the surface temperature becomes 80°C or lower; and winding the running metal strip cooled after formation of the coating, wherein a ratio of the polycarbonate unit to a total resin mass in the coating is 10 to 80 mass%.
[2] The method for producing a coated metal strip according to [1], wherein the coating material further contains an oxide or a fluoride of a metal selected from the group consisting of Ti, Zr, V, Mo, and W, or a combination thereof.
[3] The method for producing a coated metal strip according to [1] or [2], wherein the coating material further contains one or more polycarbonate unit-free resins selected from the group consisting of an acrylic resin, an epoxy resin, an urethane resin, a polyolefin resin, a phenol resin, a polyester resin, a copolymer thereof, and a modified product thereof.

### Advantageous Effects of Invention

According to the present invention, a coated metal strip can be produced, in which the adhesion between a metal strip and a coating is excellent and blocking is less likely to occur, and which can be joined strongly to a molded article of a thermoplastic resin composition.

### Brief Description of Drawings

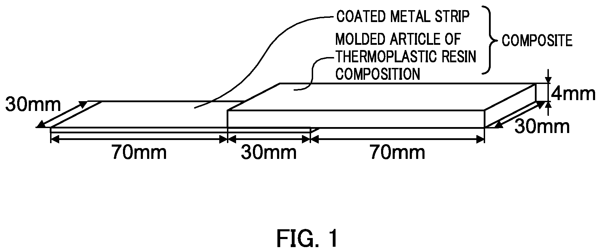

FIG. 1 schematically illustrates the constitution of a composite for evaluation of joining strength between a coated metal strip and a molded article of a thermoplastic resin composition.

### Description of Embodiments

The method for producing a coated metal strip according to the present invention is a method for producing a coated metal strip in which a coating to be joined to a molded article of a thermoplastic resin composition is formed, the method including steps of 1) providing a metal strip and running the metal strip, 2) applying a coating material on the running metal strip, 3) baking the coating material to form a coating, and 4) cooling the metal strip (coated metal strip) having the coating formed thereon, and winding the metal strip. Typically, these steps are performed continuously.

Hereinafter, each step of the method for producing a coated metal strip according to the present invention will be described.

### 1) First Step

In the first step, a metal strip is provided and run. For example, a reel on which a metal strip is wound in a coil form is placed in a continuous coating line (CCL). Subsequently, the continuous coating line is operated to feed and run the metal strip. The distance and speed of running of the metal strip are not particularly limited, and can be set appropriately in accordance with each step described below. In the fourth step described below, the metal strip is wound again in a coil form in the continuous coating line.

### [Metal Strip]

The metal strip is a base material to be coated which has a large length relative to its width, and can be wound in a coil form. The metal strip is not particularly limited by its type. Examples of the metal strips include cold-rolled steel strips, zinc-coated steel strips, Zn-Al alloy-coated steel strips, Zn-Al-Mg alloy-coated steel strips, Zn-Al-Mg-Si alloy-coated steel strips, aluminum-coated steel strips, stainless steel strips (including austenitic, martensitic, ferritic, and ferrite-martensite duplex-phase stainless steel strips), aluminum strips, aluminum alloy strips, copper strips, and copper alloy strips.

### [Pretreatment]

Prior to the second step, the metal strip may be subjected to a pretreatment. For example, degreasing or pickling may be performed on the metal strip as a pretreatment. These pretreatments can be performed by an appropriate method known in the art in accordance with the type of the metal strip. For example, degreasing can be performed by subjecting the running metal strip to spraying of an alkaline treatment liquid, dipping in an alkaline treatment liquid, or an electrolytic treatment.

### [Chemical Conversion Treatment]

Prior to the second step, a chemical conversion film may be formed on the metal strip by applying a chemical conversion treatment liquid on the running metal strip surface followed by drying. The chemical conversion film is disposed on the metal strip surface, and improves adhesion between the metal strip and the coating, and corrosion resistance of the metal strip.

The chemical conversion treatment for forming the chemical conversion film is not particularly limited by its type. Examples of the chemical conversion treatments include chromate conversion treatment, chromium-free conversion treatment, and phosphating treatment. The coverage of the chemical conversion film formed by the chemical conversion treatment is not particularly limited as long as the coverage falls within a range effective for improving the adhesion and corrosion resistance of the coating. For example, the coverage of a chromate film can be adjusted such that the coverage attains 5 to 100 mg/m² in terms of the total amount of Cr. The coverage of a chromium-free film can be adjusted such that the coverage of a Ti-Mo composite film falls within a range of 10 to 500 mg/m², or the coverage of a fluoro acid film falls within a range of 3 to 100 mg/m² in terms of the amount of fluorine or in terms of the total amount of metal elements. The coverage of the phosphate film can be adjusted to 0.1 to 5 g/m².

The coating amount of the chemical conversion treatment liquid is not particularly limited as long as a desired amount of the chemical conversion film can adhere, and can be appropriately adjusted in accordance with, e.g., the viscosity of the chemical conversion treatment liquid or method for applying the chemical conversion treatment liquid.

The method for applying the chemical conversion treatment liquid is not particularly limited and can be appropriately selected from methods known in the art. Examples of the methods for the application include roll coating, curtain flow, spraying, and dipping methods.

The drying condition of the chemical conversion treatment liquid may be appropriately set in accordance with, e.g., the composition of the chemical conversion treatment liquid. For example, a metal strip having the chemical conversion treatment liquid applied thereon is continuously conveyed into a drying oven without being washed with water, and heated until the temperature thereof reached to fall within a range of 50 to 250°C. The above can form a uniform chemical conversion film on the metal strip surface.

### 2) Second Step

In the second step, a predetermined coating material is applied on a metal strip which is running under predetermined conditions.

### [Coating Material]

The coating material contains a polyurethane resin containing a polycarbonate unit as an essential component, and may contain a polycarbonate unit-free resin as an optional component. The coating material may further contain a metal compound described below, an additive and the like as necessary. Further, the coating material may contain a solvent as necessary. The solvent is not particularly limited by its type as long as the solvent is a liquid in which various components in the coating material can dissolve or disperse uniformly, and which evaporates during the formation of the coating. The solvent is preferably water, and in this case, the coating material is an aqueous emulsion.

The polyurethane resin containing a polycarbonate unit has a polycarbonate unit in its molecular chain. The "polycarbonate unit" refers to a structure shown below in the molecular chain of the polyurethane resin. The polyurethane resin containing the polycarbonate unit has a skeleton (e.g., a benzene ring) and a functional group similar to those of a thermoplastic resin contained in a molded article of a thermoplastic resin composition described below. Accordingly, when a thermoplastic resin composition is thermocompression bonded to the coated metal strip, the polyurethane resin containing the polycarbonate unit becomes compatible and bonds strongly with the thermoplastic resin composition. Therefore, the polyurethane resin containing the polycarbonate unit, contained in the coating, can improve the adhesion of a molded article of the thermoplastic resin composition to the coating.

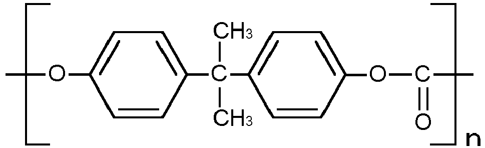

The polyurethane resin containing a polycarbonate unit can be prepared, for example, by the following steps. An organic polyisocyanate is reacted with a polycarbonate polyol and a polyol having a tertiary amino group or a carboxyl group to form a urethane prepolymer. A polyol other than the polycarbonate polyol compound, for example, a polyester polyol or a polyether polyol, may be used in combination to an extent that does not compromise the objects of the present invention.

The tertiary amino group of the produced urethane prepolymer is neutralized with an acid or quaternized with a quaternizing agent, followed by chain elongation using water to thereby form a cationic polyurethane resin containing a polycarbonate unit.

Alternatively, the carboxyl group of the produced urethane prepolymer is neutralized with a basic compound, such as triethylamine, trimethylamine, diethanolmonomethylamine, diethylethanolamine, caustic soda, or caustic potassium, and conversed to a carboxylate to thereby form an anionic polyurethane resin containing a polycarbonate unit.

The polycarbonate polyol is obtained through the reaction of a carbonate compound, such as dimethyl carbonate, diethyl carbonate, ethylene carbonate, or propylene carbonate, with a diol compound, such as ethylene glycol, diethylene glycol, propylene glycol, dipropylene glycol, neopentyl glycol, methylpentanediol, dimethylbutanediol, butyl ethyl propanediol, diethylene glycol, triethylene glycol, tetraethylene glycol, 1,4-butanediol, 1,4-cyclohexanediol, or 1,6-hexanediol. The polycarbonate polyol may be obtained by chain elongation using an isocyanate compound.

The organic polyisocyanate is not particularly limited by its type. Examples of the organic polyisocyanates include 2,4-tolylene diisocyanate, 2,6-tolylene diisocyanate, m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dichloro-4,4'-biphenylene diisocyanate, 1,5-naphthalene diisocyanate, 1,5-tetrahydronaphthalene diisocyanate, tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, xylylene diisocyanate, tetramethylxylylene diisocyanate, hydrogenated xylylene diisocyanate, lysine diisocyanate, isophorone diisocyanate, and 4,4'-dicyclohexylmethane diisocyanate. These organic polyisocyanates may be used alone or in combination.

As described above, the coating material may further contain a polycarbonate unit-free resin as an optional component. The polycarbonate unit-free resin further improves the adhesion of the coating to the metal strip. The polycarbonate unit-free resin is not particularly limited by its type as long as the resin contains no polycarbonate unit in its molecular chain. A polycarbonate unit-free resin containing a polar group is preferred from the viewpoint of further improving the adhesion of the coating to the metal strip. Examples of the types of the polycarbonate unit-free resins include epoxy resins, polyolefin resins, phenol resins, acrylic resins, polyester resins, and polycarbonate unit-free urethane resins. These resins may be used alone or in combination.

Examples of the types of the epoxy resins include bisphenol A epoxy resins, bisphenol F epoxy resins, and bisphenol AD epoxy resins. Examples of the types of the polyolefin resins include polyethylene resins and polypropylene resins. Examples of the types of the phenol resins include novolac resins and resol resins. The polycarbonate unit-free polyurethane resin is obtained by copolymerization of a diol and a diisocyanate. Examples of the types of the diols include diols other than polycarbonate diol, for example, bisphenol A, 1,6-hexanediol, and 1,5-pentanediol. Examples of the types of the diisocyanates include aromatic diisocyanates, aliphatic diisocyanates, and alicyclic diisocyanates.

The coating material contains the polyurethane resin containing a polycarbonate unit such that the ratio of the polycarbonate unit to the total mass of the resin contained in the coating is 10 to 80 mass%. When the ratio of the polycarbonate unit is less than 10 mass%, the adhesion of a molded article of a thermoplastic resin composition to the coating may become unsatisfactory. On the other hand, when the ratio of the polycarbonate unit is more than 80 mass%, the adhesion of the coating to a metal strip may become unsatisfactory. The ratio of the polycarbonate unit to the total mass of the coating can be determined by nuclear magnetic resonance spectroscopy (NMR analysis) using a sample of the coating dissolved in chloroform.

Preferably, the coating material further contains an oxide or a fluoride of a metal (valve metal) selected from the group consisting of Ti, Zr, V, Mo, and W, or a combination thereof. Dispersing the metal compound(s) in the coating can further improve the corrosion resistance of a coated metal strip. Particularly, the fluorides of these metals can also be expected to suppress the corrosion at a film defect area by virtue of their self-repairing effects.

The coating material may further contain a soluble metal phosphate or complex phosphate, or poorly soluble metal phosphate or complex phosphate. The soluble metal phosphate and complex phosphate further improve the corrosion resistance of the coated metal strip by complementing the self-repairing effects of the above-mentioned metal (valve metal) fluoride(s). The poorly soluble metal phosphate and complex phosphate disperse in the coating to improve film strength. The soluble metal phosphate or complex phosphate, or poorly soluble metal phosphate or complex phosphate is, for example, a salt of Al, Ti, Zr, Hf, Zn or the like.

The coating material may further contain an additive, such as an etching agent, an inorganic compound, a lubricant, a color pigment, a dye or the like, as necessary. An etching agent improves the adhesion of the coating to the metal strip by activating the metal strip surface. Examples of types of the etching agents include fluorides such as hydrofluoric acid, ammonium fluoride, hydrogen fluorozirconate and hydrogen fluorotitanate. An inorganic compound improves water resistance by densifying the coating. Examples of types of the inorganic compounds include: sols of inorganic oxides such as silica, alumina, and zirconia; and phosphates such as sodium phosphate, calcium phosphate, manganese phosphate, and magnesium phosphate. A lubricant can suppress the occurrence of galling on the coated metal strip surface. Examples of types of the lubricants include: organic lubricants, such as fluorine-based lubricants, polyethylene-based lubricants and styrene-based lubricants; and inorganic lubricants, such as molybdenum disulfide and talc. A color pigment and dye impart a predetermined color tone to the coating. Examples of types of the color pigments include inorganic pigments and organic pigments. Examples of types of the dyes include organic dyes.

The ratio of a nonvolatile component in the coating material is 5 mass% or more. When the ratio of the nonvolatile component in the coating material is less than 5 mass%, it becomes difficult to form a coating with a desired film thickness (0.3 µm or more), and therefore, the joinability between the metal strip and a molded article of a thermoplastic resin composition may become unsatisfactory. From such a viewpoint, the ratio of the nonvolatile component in the coating material is preferably 5 mass% or more, and more preferably 8 mass% or more.

### [Method for Applying Coating Material]

One of the features of the method for producing a coated metal strip according to the present invention is application of a coating material in a state where the surface temperature of a running metal strip is 60°C or lower. When a coating material is applied on/above a metal strip in a state where the surface temperature of the metal strip is more than 60°C, the coating material applied on the metal strip solidifies quickly, so that a normal coating with high adhesion cannot be formed. The method for adjusting the surface temperature of a metal strip to 60°C or lower is not particularly limited. For example, the metal strip may be cooled by water cooling, radiational cooling, air cooling or the like until the surface temperature of the metal strip becomes 60°C or lower. The length of the running line, the running velocity of the metal strip, or the like is appropriately adjusted. From the above viewpoint, the surface temperature of the metal strip during the application of a coating material is preferably 60°C or lower, and more preferably 40°C or lower.

The amount of the coating material to be applied on the metal strip is appropriately adjusted so that the film thickness of a coating becomes 0.3 µm or more, in accordance with, e.g., the viscosity of the coating material or method for applying the coating material. When the film thickness of a coating is less than 0.3 µm, it becomes difficult to uniformly cover the metal strip surface with the coating. Accordingly, when a metal strip and a molded article of a thermoplastic resin composition are joined, fine voids are formed between the metal strip and the molded article of a thermoplastic resin composition, and thus the adhesive strength of the molded article of a thermoplastic resin composition to the metal strip may become unsatisfactory. On the other hand, the upper limit of the film thickness of the coating is not particularly limited, but preferably 20 µm or less. No significant performance improvement is recognized with the film thickness of the coating of more than 20 µm, and it is also disadvantageous in terms of production and the cost. The method for measuring the film thickness of the coating is not particularly limited and can be appropriately selected from methods known in the art. Examples of the methods for measuring the film thickness of the coating include gravimetric method, x-ray fluorescence method and methods using an infrared film thickness meter.

The method for applying the coating material is not particularly limited and can be appropriately selected from methods known in the art. Examples of the methods for applying the coating material include roll coating, curtain flow, spraying, and dipping methods.

### 3) Third Step

In the third step, the coating material applied in the second step is baked to form a coating on a running metal strip.

The baking temperature of the coating material is in a range of 80 to 250°C. When the baking temperature is lower than 80°C, the adhesion between the metal strip and the coating, and the joinability between the coating and a molded article of a thermoplastic resin composition decrease, due to residual moisture in the coating, incomplete fusion between emulsion particles in the coating material, or the like. From such a viewpoint, the baking temperature of the coating material is preferably 80°C or higher, and more preferably 100°C or higher. On the other hand, when the baking temperature is higher than 250°C, polymerization in the coating components occurs excessively, and the joinability between the coating and a molded article of a thermoplastic resin composition may decrease. From such a viewpoint, the baking temperature of the coating material is preferably 250°C or lower, and more preferably 230°C or lower.

The method for baking the coating material is not particularly limited, and the metal strip having a coating material thereon may be heated using a dryer or an oven. For example, in the case of using a dryer, it is suffice to blow hot air to the coating material. The method for heating by the oven is not particularly limited and can be appropriately selected from methods known in the art. Examples of the methods for heating by the oven include methods using a hot air heating system, a far-infrared system, a near-infrared system, a high frequency heating system and a resistance heating element system.

The baking time of the coating material is not particularly limited as long as a coating having high adhesion to a metal strip can be formed. The baking time of a coating material can be appropriately adjusted in accordance with, e.g., the baking temperature or the baking method.

### 4) Fourth Step

In the fourth step, the metal strip (coated metal strip) having a coating formed thereon is cooled and wound in a coil form.

One of the features of the method for producing a coated metal strip according to the present invention is the surface temperature of the coated metal strip being 80°C or lower during winding of the coated metal strip. When a coated metal strip is wound while its surface temperature is more than 80°C, joining (blocking) between coated metal strips adjacent to each other in the wound state occurs in some cases. From the above viewpoint, the surface temperature of the metal strip during the winding is preferably 80°C or lower, and more preferably 60°C or lower.

The temperature of the coated metal strip immediately after the baking of the coating material is 80°C or higher in the third step, and therefore, the coated metal strip is cooled until the surface temperature becomes 80°C or lower in the fourth step as the first process. The method for cooling the coated metal strip is not particularly limited, and, for example, the metal strip can be cooled by water cooling, air cooling, radiational cooling or the like. For example, water cooling is performed by dipping the coated metal strip in water. Air cooling is performed by blowing cold air to the coated metal strip. The coated metal strip cooled to have a temperature of 80°C or lower is wound on a reel.

As described above, a coated metal strip can be produced, in which the adhesion between a metal strip and a coating is excellent and blocking is less likely to occur, by adjusting the temperature of the metal strip during the application of a coating material and the temperature of the coated metal strip during the winding to fall within predetermined temperature ranges.

In the above embodiment, a method for producing a coated metal strip in which a coating is formed on one surface of a metal strip is described. However, in the method for producing a coated metal strip according to the present invention, a coating may be formed on both surfaces of a metal strip, in accordance with use. For example, by using 2-coat 2-bake type continuous coating line (CCL), after a coating is formed on one surface of a metal strip in the first coater, another coating may be further formed on the other surface of the metal strip in the second coater. In this case, a molded article of a thermoplastic resin composition is to be joined to both surfaces of the coated metal strip.

The thermoplastic resin constituting a molded article of a thermoplastic resin composition, which is to be joined to the coated metal strip produced by the above production method, is not particularly limited by its type. Examples of the types of the thermoplastic resins include acrylonitrile-butadiene-styrene (ABS) resins, polyethylene terephthalate (PET) resins, polybutylene terephthalate (PBT) resins, polycarbonate (PC) resins, polyamide (PA) resins, and polyphenylene sulfide (PPS) resins, and combinations thereof. Among them, as described above, a thermoplastic resin containing a benzene ring which is also included in the polycarbonate unit is preferred, and a PBT resin or a PPS resin is particularly preferred. Further, the shape of the molded article of a thermoplastic resin composition is not particularly limited, and may be appropriately selected in accordance with use.

Hereinafter, the method for producing a coated metal strip according to the present invention will be described in detail with reference to Examples. However, the present invention is not intended to be limited by these Examples.

### Examples

### 1. Production of Coated Metal Strip

### (1) Provision of Metal Strip

As base materials to be coated for coated metal strips, two types of metal strips, namely stainless steel strips and molten Zn-Al-Mg alloy-coated steel strips were provided.

### A. Stainless Steel Strip

As stainless steel strips, steel strips composed of SUS430 with No.4 finish, having a thickness of 0.8 mm, were provided.

### B. Molten Zn-Al-Mg Alloy-coated Steel Strip

As molten Zn-Al-Mg alloy-coated steel strips, molten Zn-6 mass% Al-3 mass% Mg alloy-coated steel strips having a coating coverage of 45 g/m² on one side were provided. The base steel strips were cold-rolled steel strips (SPCC) having a thickness of 0.8 mm.

### (2) Preparation of Coating Material

Various coating materials each having a nonvolatile component in a range of 4 to 60% were prepared by adding a polycarbonate unit-containing resin, a polycarbonate unit-free resin, and various additives to water. Each coating material was supplemented with 0.5 mass% of ammonium fluoride (Morita Chemical Industries Co., Ltd.) as an etching agent, 2 mass% of colloidal silica (Nissan Chemical Industries, Ltd.) as an inorganic compound, and 0.5 mass% of phosphoric acid (Kishida Chemical Co., Ltd.).

As a polycarbonate unit-containing resin, a polyurethane resin (dry solid content: 30 mass%) containing 90 mass% of polycarbonate unit, which was prepared by a resin manufacturer as a product under test, was used.

As polycarbonate unit-free resins, were used a polycarbonate unit-free polyurethane resin (HUX-232; dry solid content: 30 mass%, ADEKA Corporation), an epoxy resin (ADEKA Resin EM-0434AN; dry solid content: 30 mass%, ADEKA Corporation), a polyolefin resin (HARDLEN NZ-1005; dry solid content: 30 mass%, Toyobo Co., Ltd.), and a phenol resin (TAMANOL E-100; dry solid content: 52 mass%, Arakawa Chemical Industries, Ltd.) (see Table 1).

### (3) Formation of Coating and Winding of Coated Metal Strip

The following steps were performed while the metal strip was in a running state in a continuous coating line. Each metal strip was degreased by dipping for 30 seconds in a pH 12 aqueous alkali solution for degreasing (SD-270; Nippon Paint Co., Ltd.) with a solution temperature of 60°C. Subsequently, the degreased metal strip was allowed to pass a water spray-washing zone to remove alkaline components from the metal strip surface. The cleaned metal strip was then allowed to pass a hot air-dryer zone for drying and subjected to radiational cooling as necessary, and the surface temperature of the metal strip was adjusted to a predetermined temperature within a range of 30 to 70°C.

A coating material was applied to both surfaces of the metal strip having the adjusted surface temperature using a roll coater. Subsequently, without cleaned with water, the metal strip having the coating material applied thereon was allowed to pass a hot air-dryer zone to adjust its surface temperature (baking temperature) to 60 to 260°C for baking the coating material.

The coated metal strip was cooled using a blower until the surface temperature became 30 to 90°C, and subsequently wound in a coil form using a coil winding device.

Regarding each coated metal strip produced by these above steps, in Table 1 are shown the type of the base material to be coated, the ratio of the polycarbonate (PC) unit-containing resin, the ratio of the polycarbonate (PC) unit-free resin, the ratio of the polycarbonate (PC) unit to the total resin mass, the ratio of the nonvolatile component in the coating material, the metal strip temperature immediately before the application, the baking temperature, the winding temperature, the film thickness of the coating, and the category.

**[Table 1]**

| Coated Metal Strip No. | Base Material to be Coated | PC Unit-containing Resin (mass%) | PC Unit-free Resin (mass%) | | | | PC Unit (mass%) | Nonvolatile Component (mass%) | Metal Strip Temperature immediately before Application (°C) | Baking Temperature (°C) | Winding Temperature (°C) | Film Thickness (µm) | Category |
|---|---|---|---|---|---|---|---|---|---|---|---|---|---|
| | | | a | b | c | d | | | | | | | |
| 1 | A | 7.3 | 28.3 | - | 30.4 | - | 10 | 20 | 30 | 100 | 30 | 1.5 | Ex. 1 |
| 2 | B | 59.3 | - | 7.4 | - | - | 80 | 20 | 40 | 140 | 30 | 0.8 | Ex. 2 |
| 3 | B | 11.1 | - | 5.5 | - | - | 60 | 5 | 50 | 160 | 40 | 0.6 | Ex. 3 |
| 4 | A | 11.1 | 55.5 | - | - | - | 15 | 20 | 60 | 180 | 50 | 2.3 | Ex. 4 |
| 5 | A | 11.1 | 27.8 | 27.8 | - | - | 15 | 20 | 40 | 80 | 60 | 3.2 | Ex. 5 |
| 6 | A | 22.3 | 22.2 | - | - | 12.8 | 30 | 20 | 40 | 200 | 70 | 1.1 | Ex. 6 |
| 7 | A | 51.9 | - | - | 14.8 | - | 70 | 20 | 50 | 250 | 80 | 2.4 | Ex. 7 |
| 8 | A | 11.1 | 55.5 | - | - | - | 15 | 20 | 40 | 150 | 60 | 0.3 | Ex. 8 |
| 9 | B | 45.8 | 13.8 | 13.8 | 13.8 | 8.3 | 50 | 30 | 40 | 160 | 60 | 1.5 | Ex. 9 |
| 10 | B | 6.2 | - | 33.6 | 22.2 | - | 9 | 20 | 30 | 150 | 50 | 2.2 | Comp. Ex. 1 |
| 11 | A | 63.0 | 3.7 | - | - | - | 85 | 20 | 40 | 150 | 40 | 2.4 | Comp. Ex. 2 |
| 12 | B | 7.5 | 5.8 | - | - | - | 51 | 4 | 50 | 150 | 30 | 0.1 | Comp. Ex. 3 |
| 13 | B | 1.3 | - | 4.7 | 7.2 | - | 9 | 4 | 60 | 140 | 40 | 0.2 | Comp. Ex. 4 |
| 14 | B | 37.1 | 29.6 | - | - | - | 50 | 20 | 70 | 140 | 50 | 4.1 | Comp. Ex. 5 |
| 15 | A | 10.4 | 28.1 | - | - | 16.2 | 14 | 20 | 60 | 60 | 60 | 3.5 | Comp. Ex. 6 |
| 16 | B | 22.3 | - | 14.8 | 14.8 | 8.5 | 30 | 20 | 50 | 260 | 60 | 1.8 | Comp. Ex. 7 |
| 17 | B | 22.3 | - | 44.4 | - | - | 30 | 20 | 40 | 140 | 90 | 2.2 | Comp. Ex. 8 |
| 18 | B | 37.1 | 29.6 | - | - | - | 50 | 20 | 30 | 150 | 60 | 0.2 | Comp. Ex. 9 |

| | | | | | | | | | | | | | |
|---|---|---|---|---|---|---|---|---|---|---|---|---|---|
| - Base Material to be Coated A: Stainless Steel Strip (SUS430) B: Molten Zn-6 mass% Al-3 mass% Mg Alloy-coated Steel Strip - PC Unit-free Resin a: PC Unit-free Polyurethane Resin (HUX-232) b: Epoxy Resin (ADEKA Resin EM-0434AN) c: Polyolefin Resin (HARDLEN NZ-1005) d: Phenol Resin (TAMANOL E-100) | | | | | | | | | | | | | |

### 2. Evaluation of Coated Metal Strip

### (1) Evaluation for Blocking Resistance

Each coated metal strip wound in a coil form was put through a recoiling line, and rewinding was performed at the line speed of 100 m/min. Based on the sticking state at this time between coated metal strips adjacent to each other, the blocking resistance of each coated metal strip was evaluated. Each coated metal strip was evaluated as "Good" when no sticking was recognized, and as "Poor" when sticking was recognized.

### (2) Evaluations for Adhesion of Coating and Joinability to Molded Article of Thermoplastic Resin Composition

For each coated metal strip, a composite of the coated metal strip and a molded article of a thermoplastic resin composition was prepared for use in evaluation for the adhesion of the coating and the jointability to the molded article of a thermoplastic resin.

A polyethylene terephthalate (PBT) resin composition (NOVADURAN 5710F40; melting point: 230°C, Mitsubishi Engineering-Plastics Corporation) was provided as the thermoplastic resin composition. This thermoplastic resin composition contains 40 mass% glass fiber as a filler.

FIG. 1 schematically illustrates a composite for evaluation. As shown in FIG. 1, a test piece of 30 mm width and 100 mm length was cut out from each coated metal strip. The test piece was inserted into an injection molding die, and a thermoplastic resin composition in a molten state was injected into a cavity of the injection molding die. The shape of the cavity is of 30 mm width, 100 mm length and 4 mm thickness. On one end, in the region having a width of 30 mm and a length of 30 mm, the thermoplastic resin composition is in contact with the coated metal strip. The injection of the thermoplastic resin composition into the cavity is followed by cooling solidification to obtain a composite for evaluation.

Regarding each composite, the coated metal strip and the molded article of the thermoplastic resin composition were pulled in the opposite directions on the same plane at a rate of 100 mm/min, and the strength at break (peel strength) was measured. At this time, the broken portion was observed to see where the peeling was occurred, i.e., between the metal strip and the coating, or between the coating and the molded article. The composite was evaluated as "Poor" when the peel strength was less than 1.0 kN, as "Fair" when the peel strength was 1.0 kN or more and less than 1.5 kN, as "Good" when the peel strength was 1.5 kN or more and less than 2.0 kN, and as "Excellent" when the peel strength was 2.0 kN or more. The composite having the peel strength of less than 1.0 kN (Poor) was determined to be unacceptable due to its incapability of meeting for practical use.

### (3) Results

Regarding each coated metal strip, in Table 2 are shown the category, the coated metal strip number, the evaluation result for the blocking resistance, the evaluation result for the peel strength and the peeling position.

**[Table 2]**

| Category | Coated Metal Strip No. | Blocking Resistance | Peel Strength (kN) | Peeling Position |
|---|---|---|---|---|
| Ex. 1 | 1 | Good | 1.7 (Good) | Internal Break in Molded Article Interface between Coating and Molded Article |
| Ex. 2 | 2 | Good | 1.5 (Good) | Internal Break in Molded Article Interface between Coating and Molded Article |
| Ex. 3 | 3 | Good | 1.9 (Good) | Internal Break in Molded Article Interface between Coating and Molded Article |
| Ex. 4 | 4 | Good | 3.0 (Excellent) | Internal Break in Molded Article Interface between Coating and Molded Article |
| Ex. 5 | 5 | Good | 2.3 (Excellent) | Internal Break in Molded Article Interface between Coating and Molded Article |
| Ex. 6 | 6 | Good | 2.8 (Excellent) | Internal Break in Molded Article Interface between Coating and Molded Article |
| Ex. 7 | 7 | Good | 1.6 (Good) | Internal Break in Molded Article Interface between Coating and Molded Article |
| Ex. 8 | 8 | Good | 2.3 (Excellent) | Internal Break in Molded Article Interface between Coating and Molded Article |
| Ex. 9 | 9 | Good | 1.2 (Fair) | Internal Break in Molded Article Interface between Coating and Molded Article |
| Comp. Ex. 1 | 10 | Good | 0.4 (Poor) | Interface between Coating and Molded Article |
| Comp. Ex. 2 | 11 | Good | 0.6 (Poor) | Interface between Metal strip and Coating |
| Comp. Ex. 3 | 12 | Good | 0.8 (Poor) | Unable to Confirm |
| Comp. Ex. 4 | 13 | Good | 0.6 (Poor) | Unable to Confirm |
| Comp. Ex. 5 | 14 | Good | 0.6 (Poor) | Interface between Metal strip and Coating |
| Comp. Ex. 6 | 15 | Good | 0.8 (Poor) | Interface between Metal strip and Coating Interface between Coating and Molded Article |
| Comp. Ex. 7 | 16 | Good | 0.4 (Poor) | Interface between Coating and Molded Article |
| Comp. Ex. 8 | 17 | Poor | 2.0 (Excellent) | Internal Break in Molded Article Interface between Coating and Molded Article |
| Comp. Ex. 9 | 18 | Good | 0.8 (Poor) | Unable to Confirm |

As shown in Table 2, the composite of Comparative Example 1 had a too low ratio of the polycarbonate unit in the coating, and thus had unsatisfactory joining strength between the coating and the molded article. The composite of Comparative Example 2 had a too high ratio of the polycarbonate unit in the coating, and thus had unsatisfactory adhesion between the metal strip and the coating. Each of the composites of Comparative Examples 3 and 4 had a too small amount of the nonvolatile component in the coating material, so that a thick coating could not have been formed, and thus had unsatisfactory peel strength. Since the coating was too thin, a peeling position could not have been confirmed. As for the composite of Comparative Example 5, the temperature of the metal strip during the application of the coating material was too high, and thus the adhesion between the metal strip and the coating was unsatisfactory. As for the composite of Comparative Example 6, the temperature during the baking of the coating material was too low, and thus the adhesion between the metal strip and the coating and joining strength between the coating and the molded article were unsatisfactory. As for the composite of Comparative Example 7, the temperature during the baking of the coating material was too high, and thus joining strength between the coating and the molded article was unsatisfactory. As for the composite of Comparative Example 8, the temperature of the coated metal strip during the winding was too high, and thus blocking resistance was unsatisfactory. Since the coating in the composite of Comparative Example 9 was too thin, peel strength was unsatisfactory, and a peeling position could not have been confirmed.

On the other hand, regarding each of the coated metal strips of Examples 1 to 9, blocking resistance was excellent, and further, adhesion between the metal strip and the coating, and joining strength between the coating and the molded article were also excellent. Most of the peeling positions were inside the molded articles (internal break), but peeling occurred at the interface between the coating and the molded article in some cases.

As can be seen from the above results, according to the method for producing a coated metal strip according to the present invention, a coated metal strip can be provided, in which a coating to be joined strongly to a molded article of a thermoplastic resin composition is formed, the adhesion between a metal strip and the coating is excellent, and blocking is less likely to occur.

### Industrial Applicability

The coated metal strip produced by the method for producing a coated metal strip according to the present invention is excellent in joinability to a molded article of a thermoplastic resin composition, and therefore, suitably used in the fields of, e.g., various electronic devices, consumer electronics, medical equipment, automobile bodies, car accessories, and constructional materials.

## Claims

1. A method for producing a coated metal strip which has a metal strip and a coating formed on at least one surface of the metal strip, the coating being a part to be joined to a molded article of a thermoplastic resin composition, the method comprising:
running a metal strip;
applying a coating material containing a polyurethane resin and 5 mass% or more of a nonvolatile component on the running metal strip in a state where a surface temperature of the running metal strip is 60°C or lower, the polyurethane resin containing a polycarbonate unit;
baking the coating material applied on the running metal strip at a temperature in a range of 80 to 250°C to form a coating having a film thickness of 0.3 µm or more on the running metal strip;
cooling the running metal strip having the coating formed thereon until the surface temperature becomes 80°C or lower; and
winding the running metal strip cooled after formation of the coating, wherein:
a ratio of the polycarbonate unit to a total resin mass in the coating is 10 to 80 mass%.

2. The method for producing a coated metal strip according to claim 1, wherein:
the coating material further contains an oxide or a fluoride of a metal selected from the group consisting of Ti, Zr, V, Mo, and W, or a combination thereof.

3. The method for producing a coated metal strip according to claim 1 or 2, wherein:
the coating material further contains one or more polycarbonate unit-free resins selected from the group consisting of an acrylic resin, an epoxy resin, an urethane resin, a polyolefin resin, a phenol resin, a polyester resin, a copolymer thereof, and a modified product thereof.

## Patentansprüche

1. Verfahren zum Herstellen eines beschichteten Metallstreifens, der einen Metallstreifen und eine auf mindestens einer Oberfläche des Metallstreifens ausgebildete Beschichtung hat, wobei es sich bei der Beschichtung um ein an einen geformten Artikel aus einer thermoplastischen Harzzusammensetzung anzufügendes Teil handelt, wobei das Verfahren umfasst:
Laufenlassen eines Metallstreifens;
Auftragen eines Beschichtungsmaterials, das ein Polyurethanharz und 5 Masse-% oder mehr eines nichtflüchtigen Bestandteils enthält, auf den laufenden Metallstreifen in einem Zustand, in dem eine Oberflächentemperatur des laufenden Metallstreifens 60°C oder weniger beträgt, wobei das Polyurethanharz eine Polycarbonateinheit enthält;
Einbrennen des auf den laufenden Metallstreifen aufgetragenen Beschichtungsmaterials in einem Bereich von 80 bis 250°C, um eine Beschichtung mit einer Schichtdicke von 0,3 µm oder mehr auf dem laufenden Metallstreifen auszubilden;
Abkühlen des laufenden Metallstreifens mit der darauf ausgebildeten Beschichtung, bis die Oberflächentemperatuir 80°C oder niedriger wird; und
Aufwickeln des abgekühlten laufenden Metallstreifens nach der Ausbildung der Beschichtung, wobei:
ein Verhältnis der Polycarbonateinheit zu einer gesamten Harzmasse in der Beschichtung 10 bis 80 Masse-% beträgt.

2. Verfahren zum Herstellen eines beschichteten Metallstreifens nach Anspruch 1, wobei:
das Beschichtungsmaterial darüber hinaus ein Oxid und ein Fluorid eines Metalls enthält, das aus der Gruppe ausgewählt ist, die aus Ti, Zr, V, Mo und W oder einer Kombination von diesen besteht.

3. Verfahren zum Herstellen eines beschichteten Metallstreifens nach Anspruch 1 oder 2, wobei:
das Beschichtungsmaterial darüber hinaus ein oder mehrere polycarbonateinheitfreie Harze enthält, die aus der Gruppe ausgewählt sind, die aus einem Acrylharz, einem Epoxidharz, einem Urethanharz, einem Polyolefinharz, einem Phenolharz, einem Polyesterharz, einem Copolymer von diesen und einem modifizierten Produkt von diesen besteht.

## Revendications

1. Procédé de production d'une bande métallique revêtue qui comporte une bande métallique et un revêtement formé sur au moins une surface de la bande métallique, le revêtement étant une partie devant être assemblée à un article moulé d'une composition de résine thermoplastique, le procédé comprenant :
le défilement d'une bande métallique ;
l'application d'un matériau de revêtement contenant une résine de polyuréthane et 5 % en masse ou plus d'un composant non volatile sur la bande métallique en défilement dans un état où une température de surface de la bande métallique en défilement est de 60 °C ou moins, la résine de polyuréthane contenant une unité de polycarbonate ;
la cuisson du matériau de revêtement appliqué sur la bande métallique en défilement à une température comprise dans une plage de 80 à 250 °C pour former un revêtement ayant une épaisseur de film de 0,3 µm ou plus sur la bande métallique en défilement ;
le refroidissement de la bande métallique en défilement sur laquelle est formée le revêtement jusqu'à ce que la température de surface soit de 80 °C ou moins ; et
l'enroulement de la bande métallique en défilement refroidie après formation du revêtement, sachant que :
un rapport de l'unité de polycarbonate à une masse totale de résine dans le revêtement est de 10 à 80 % en masse.

2. Le procédé de production d'une bande métallique revêtue selon la revendication 1, sachant que :
le matériau de revêtement contient en outre un oxyde ou un fluorure d'un métal sélectionné dans le groupe constitué par Ti, Zr, V, Mo, et W, ou une combinaison de ceux-ci.

3. Le procédé de production d'une bande métallique revêtue selon la revendication 1 ou 2, sachant que :
le matériau de revêtement contient en outre une ou plusieurs résines exemptes d'unité de polycarbonate sélectionnées dans le groupe constitué par une résine d'acrylique, une résine d'époxy, une résine d'uréthane, une résine de polyoléfine, une résine de phénol, une résine de polyester, un copolymère de celles-ci, et un produit modifié de celles-ci.
